(19) Europäisches Patentamt

European Patent Office

Office européen des brevets

(11) **EP 1 662 489 A1**

(12) **EUROPEAN PATENT APPLICATION**
published in accordance with Art. 158(3) EPC

(43) Date of publication:
**31.05.2006 Bulletin 2006/22**

(51) Int Cl.:
**G11B 7/004** (2000.01)    **G11B 7/24** (1968.09)
**G11B 7/26** (1968.09)

(21) Application number: **04772876.1**

(22) Date of filing: **01.09.2004**

(86) International application number:
**PCT/JP2004/013004**

(87) International publication number:
**WO 2005/024799 (17.03.2005 Gazette 2005/11)**

(84) Designated Contracting States:
**AT BE BG CH CY CZ DE DK EE ES FI FR GB GR HU IE IT LI LU MC NL PL PT RO SE SI SK TR**

(30) Priority: **04.09.2003 JP 2003312104**

(71) Applicant: **TDK Corporation**
**Chuo-ku,**
**Tokyo 103-8272 (JP)**

(72) Inventors:
• **KIKUKAWA, Takashi,**
**c/o TDK Corporation**
**Tokyo 103-8272 (JP)**

• **FUKUZAWA, Narutoshi,**
**c/o TDK Corporation**
**Tokyo 103-8272 (JP)**
• **KOBAYASHI, Tatsuhiro,**
**c/o TDK Corporation**
**Tokyo 103-8272 (JP)**

(74) Representative: **Grünecker, Kinkeldey,**
**Stockmair & Schwanhäusser**
**Anwaltssozietät**
**Maximilianstrasse 58**
**80538 München (DE)**

(54) **OPTICAL RECORDING MEDIUM, MANUFACTURING METHOD THEREOF, METHOD FOR RECORDING DATA ON OPTICAL RECORDING MEDIUM, AND DATA REPRODUCTION METHOD**

(57)    An optical recording medium 10 according to the present invention includes a supporting substrate 11 on which a groove 11a is formed, a light transmitting layer 12, a noble metal oxide layer 23 provided between the supporting substrate 11 and the light transmitting layer 12, wherein a depth of the groove 11a is set in excess of $\lambda/8n$ but 60 nm or less, where n is a refractive index of the light transmitting layer 12 with respect to a light whose wavelength is $\lambda$. Thus, the good signal characteristics, especially a push-pull signal with an enough amplitude, can be obtained when the super-resolution recording and super-resolution reading are carried out by irradiating the laser beam onto the noble metal oxide layer 23. Also, since the depth of the groove is set to 60 nm or less, a grave difficulty never arises in producing a stamper used to manufacture the substrate.

FIG. 1 (a)

FIG. 1 (b)

EP 1 662 489 A1

## Description

<Technical Field>

The present invention relates to an optical recording medium and a method of manufacturing the same and, more particularly, an optical recording medium of the type that a recording mark is formed by released gas and a method of manufacturing the same. Also, the present invention relates to a data recording method and a data reading method for an optical recording medium and, more particularly, a data recording method and a data reading method for an optical recording medium of the type that a recording mark is formed by released gas.

<Background Art>

As the recording medium for recording the large-capacity digital data, the optical recording medium as typified by a CD (Compact Disc) or a DVD (Digital Versatile Disc) is widely used in recent years.

Out of the CDs, the type that can neither add the data nor rewrite the data (CD-ROM) has such a structure that a reflecting layer and a protection layer are stacked on a light tranmissive substrate having a thickness of about 1.2 mm. Then, the readout of data can be carried out by irradiating a laser beam of a wavelength of about 780 nm onto the reflecting layer from the light transmissible substrate side. In contrast, out of the CDs, the data recordable type (CD-R) or the data rewritable type (CD-RW) has such a structure that a recording layer is added between the light transmissible substrate and the reflecting layer. Then, the recording and readout of data can be carried out by irradiating the laser beam of a wavelength of about 780 nm onto the recording layer from the light transmissible substrate side.

In the CD, an objective lens whose numerical aperture is almost 0.45 is used to converge the laser beam, so that a beam spot diameter of the laser beam on the reflecting layer or the recording layer can be reduced to about 1.6 $\mu$m. As a result, a storage capacity of about 700 MB and a data transfer rate of about 1 Mbps at a standard linear velocity (about 1.2 m/sec) can be attained in the CD.

Also, out of the DVDs, the type that can neither add the data nor rewrite the data (DVD-ROM) has such a structure that a multilayer body constructed by stacking a reflecting layer and a protection layer on the light transmissible substrate having a thickness of about 0.6 mm and a dummy substrate having a thickness of about 0.6 mm are pasted together via an adhesive layer. Then, the readout of data can be executed by irradiating the laser beam of an about 635 nm wavelength onto the reflecting layer from the light transmissible substrate side. In contrast, out of the DVDs, the data recordable type (DVD-R, or the like) or the data rewritable type (DVD-RW, or the like) has such a structure that a recording layer is added between the light transmissible substrate and the reflecting layer. Then, the recording and readout of data can be executed by irradiating the laser beam of an about 635 nm wavelength onto the recording layer from the light transmissible substrate side.

In the DVD, an objective lens whose numerical aperture is almost 0.6 is used to converge the laser beam, so that a beam spot diameter of the laser beam on the reflecting layer or the recording layer can be reduced to about 0.93 $\mu$m. In this manner, in the recording and readout in the DVD, the laser beam having a shorter wavelength than that in the CD is used and also the objective lens having the large numerical aperture is used. Therefore, a beam spot diameter that is smaller than that of the CD can be accomplished. As a result, a storage capacity of about 4.7 GB/one side and a data transfer rate of about 11 Mbps at a standard linear velocity (about 3.5 m/sec) can be attained in the DVD.

The optical recording medium having a data storage capacity in excess of the DVD and implementing a data transfer rate in excess of the DVD has been proposed recently. In such next-generation optical recording medium, a laser beam of an about 405 nm wavelength and an objective lens whose numerical aperture is almost 0.85 are used to accomplish the large capacity/high data transfer rate. Therefore, a beam spot diameter of the laser beam can be reduced to about 0.43 $\mu$m. As a result, a storage capacity of about 25 GB/one side and a data transfer rate of about 36 Mbps at a standard linear velocity (about 4.9 m/sec) can be realized.

In this manner, since an objective lens whose numerical aperture is very high is used in the next-generation optical recording medium, a tilt margin can be ensured sufficiently and also generation of a coma aberration can be suppressed, so that a thickness of the light transmitting layer serving as the optical path of the laser beam can be set very thin to about 100 $\mu$m. Therefore, unlike the existing optical recording medium such as CD, DVD, or the like, it is difficult to form various function layers such as the recording layer, and the like on the light transmissible substrate in the next-generation optical recording medium. Thus, the method of forming the reflecting layer and the recording layer on the supporting substrate and then forming a thin resin layer used as the light transmitting layer thereon by the spin coating method, or the like is now examined. In other words, unlike the existing optical recording medium in which respective films are formed sequentially from the light incident plane side, respective films are formed sequentially from the opposite side to the light incident plane in the production of the next-generation optical recording medium.

As explained above, a larger capacity and a higher data transfer rate of the optical recording medium can be attained mainly by the reduction of a beam spot diameter of the laser beam. Therefore, in order to attain a larger capacity and a higher data transfer rate furthermore, a beam spot diameter must be reduced much more. However, when a wavelength of the laser beam is reduced further, absorption of the laser beam in the light transmitting layer is increased suddenly and also a long-term deterioration of the light transmitting layer is increased, and therefore it is difficult to shorten a wavelength further more. Also, when a difficulty of lens design, a guarantee of a tilt margin, etc. are taken into account, it is difficult to increase the numerical aperture of the objective lens further more. That is, it is possible to say that it is very difficult to further reduce the beam spot diameter of the laser beam.

Under such circumstances, the super-resolution optical recording medium has been proposed recently as another trial to attain a larger capacity and a higher data transfer rate. The super-resolution optical recording medium signifies the optical recording medium in which a minute recording mark can be formed smaller than resolution limit and then the readout of data from such recording mark can be realized. When such optical recording medium is employed, a larger capacity and a higher data transfer rate can be attained not to require a reduction of the beam spot diameter.

When explained concretely, a diffraction limit $d_1$ is given by

$$d_1 = \lambda/2NA$$

where $\lambda$ is a wavelength of the laser beams, and NA is a numerical aperture of the objective lens. Therefore, a reading limit $d_2$ of a single frequency signal is given by

$$d_2 = \lambda/4NA$$

in the optical recording medium of the type that the data can be represented by a recording mark and a length of a blank area, i.e., a distance between edges like the CD or the DVD. That is, in the normal optical recording medium that is not the super-resolution type, the recording mark and the blank area cannot be discriminated mutually when the shortest recording mark and the shortest length of the blank area are below the reading limit. In contrast, in the super-resolution optical recording medium, the recording mark and the blank area a length of which is below the reading limit respectively can be employed. Therefore, a larger capacity and a higher data transfer rate can be realized not to reduce the beam spot diameter.

As the super-resolution optical recording medium in the prior art, the super-resolution optical recording medium called "Scattering Super RENS (Super Resolution Near-field Structure)" has been proposed (see Non-Patent Literature 1). The reading layer consisting of the phase change material layer and the metal oxide is employed in this optical recording medium. It is supposed that, when the laser beam is irradiated, the metal oxide constituting the reading layer is decomposed in a high energy portion at a center of the beam spot and then the laser beam is scattered by resultant metal particles to generate a near-field light. As a result, it is explained that, since the near-field light is irradiated locally onto the phase change material layer, the super-resolution recording and the super-resolution readout can be carried out by utilizing the phase change. Also, it is explained that, since the metal generated by the resolution of the reading layer and the oxygen are bonded again and the original metal oxide is restored when the laser beam moves away, the repeatable rewriting can be accomplished.

However, according to studies of the inventors of the present invention, it becomes apparent that a phase change in the phase change material layer hardly appears as a signal in the super-resolution optical recording medium called "Scattering Super Lens" and that the resolution of the reading layer is irreversible. In other words, it becomes apparent that the super-resolution optical recording medium called "Scattering Super Lens" can be accomplished as not the rewritable optical recording medium, on the phase change material layer of which the reversible recording mark can be formed, but the recordable optical recording medium, on the reading layer (noble metal oxide layer) of which the irreversible recording mark can be formed (see Non-Patent Literature 2).

Here, the reason why the fine recording mark a size of which is below the reading limit can be formed on the noble metal oxide layer is that the noble metal oxide layer is resolved locally in the high energy portion at the center of the beam spot and then such area is plastically deformed by resultant bubble pits. The plastically deformed portion is used as the recording mark, while the plastically not-deformed portion is used as the blank area. Meanwhile, the reason why the data can be read from the fine recording mark formed in this way is not clear at present.

[Non-Patent Literature 1] "A near-field recording and readout technology using a metallic probe in an optical disk", Jap. J. Appl. Phys., edited by Japan Society of Applied Physics, 2000, Volume 39, p.980-981

[Non-Patent Literature 2] "Rigid bubble pit formation and huge signal enhancement in super-resolution near-field structure disk with platinum-oxide layer", Applied Physics Letters, American Institute of Physics, December 16, 2002, Volume 81, Number 25, p.4697-4699

In this manner, it is found that the phase change material layer considered as the "recording layer" in the prior art does not actually act as the recording layer but the bubble generated due to the local decomposition of the noble metal oxide layer is used as the recording mark. Consequently, it is expected that the signal characteristics can be improved when a depth, a width, etc. of the groove on the substrate on which the noble metal oxide layer is formed are set while taking the deformation due to generation of the bubble, and the like into account.

<Disclosure of the Invention>

Therefore, it is an object of the present invention is to provide an optical recording medium whose signal characteristics at a time of super-resolution recording and super-resolution reading are improved, and a method of manufacturing the same.

Also, it is another object of the present invention is to provide a method of recording data on an optical recording medium whose signal characteristics at a time of super- resolution recording and super-resolution reading are improved, and a method of reading the data from such optical recording medium, by using a laser beam of a shorter wavelength and an objective lens having a larger numerical aperture.

An optical recording medium according to the present invention, includes a substrate on which a groove is formed; a noble metal oxide layer provided on the substrate; a first dielectric layer provided on a light incident plane side when viewed from the noble metal oxide layer; and a second dielectric layer provided on a side opposite to the light incident plane when viewed from the noble metal oxide layer; wherein the optical recording medium is able to record data by irradiating a laser beam whose wavelength is $\lambda$ onto the noble metal oxide layer along the groove, and a depth of the groove is set in excess of $\lambda/8n$ but 60 nm or less, where n is a refractive index of an optical path of the laser beam of a light whose wavelength is $\lambda$.

According to the present invention, since the depth of the groove is set in excess of $\lambda/8n$, the good signal characteristics, especially the push-pull signal with a sufficient amplitude, can be obtained when the super-resolution recording and super-resolution reading are executed by irradiating the laser beam onto the noble metal oxide layer. Also, since the depth of the groove is set to 60 nm or less, it is not so difficult to produce the stamper used in manufacturing the substrate.

It is preferable that the depth of the groove should be set to $\lambda/7n$ or more but 50 nm or less. According to this, the better signal characteristics can be attained and also it is possible to easily produce the stamper.

Also, it is preferable that the optical recording medium according to the present invention, further includes a light absorbing layer and a third dielectric layer arranged in order on an opposite side to the light incident plane when viewed from the second dielectric layer. With such structure, an energy of the laser beam irradiated at a time of recording can be converted effectively into a heat, and therefore the good recording characteristics can be obtained.

Also, it is preferable that the optical recording medium according to the present invention, further includes a reflecting layer provided between the substrate and the third dielectric layer. When such reflecting layer is provided, amplitude of the read signal can be increased and also readout stability can be enormously improved. Here, the term "reproduction stability" means a stability against a reading degradation phenomenon, i.e., a phenomenon that a status of the noble metal oxide layer is changed by the energy of the laser beam irradiated at a time of reading and thus an increase of noises and a reduction of carriers are caused and CNR is lowered. Preferably a thickness of the reflecting layer should be set to 5 nm ore more but 200 nm or less, and more preferably the thickness should be set to 10 nm ore more but 150 nm or less. When the thickness of the reflecting layer is set in this manner, an enough effect of improving the reproduction stability can be achieved not to largely lower the productivity.

Also, it is preferable that platinum oxide (PtOx) should be contained in the noble metal oxide layer. In this case, it is most preferable that the substantially overall noble metal oxide layer should be made of platinum oxide (PtOx). But it doesn't matter if other material or the inevitably mixed impurity is contained. When the platinum oxide (PtOx) is employed as the material of the noble metal oxide layer, the good signal characteristics and the enough stability can be achieved.

Also, it is preferable that the optical recording medium according to the present invention, further includes a light transmitting layer provided to an opposite side to the substrate when viewed from the first dielectric layer, to act as the optical path of the laser beam; and wherein a thickness of the substrate is set to 0.6 mm or more but 2.0 mm or less, and a thickness of the light transmitting layer is set to 10 $\mu$m or more but 200 $\mu$m or less. According to this, $\lambda/NA$ can be set to 640 nm or less by employing the laser beam having a wavelength ($\lambda$) below about 635 nm and the objective lens having the numerical aperture (NA) in excess of about 0.6, and thus the super-resolution recording and the super-resolution reading can be carried out. Especially, the excellent characteristics can be obtained in the super-resolution recording and the super-resolution reading using the laser beam having a wavelength of about 405 nm and the objective lens having the numerical aperture of about 0.85, both are employed in the next-generation optical recording medium.

Also, a method of manufacturing an optical recording medium according to the present invention, includes a first step of forming a reflecting layer, a third dielectric layer, a light absorbing layer, a second dielectric layer, a noble metal oxide layer, and a first dielectric layer in order on a substrate on which a groove is formed; and a second step of forming a light transmitting layer on the first dielectric layer; wherein a depth of the groove is set in excess of $\lambda/8n$ but 60 nm or less, where $\lambda$ is a wavelength of a laser beam used to record or read data, and n is a refractive index of the light transmitting layer to a light whose wavelength is $\lambda$.

According to the present invention, since the laser beam having a wavelength ($\lambda$) below about 635 nm and the objective lens having the numerical aperture (NA) in excess of about 0.6 are employed, the optical recording medium that is able to carry out the super-resolution recording and the super-resolution reading by setting λ/NA to 640 nm or less can be manufactured. In addition, since a depth Gd of the groove is set in excess of λ/8n but 60 nm or less, the good signal characteristic can be obtained when the super-resolution recording and the super-resolution reading are carried out, and also it never involve great difficulties to produce the stamper used in manufacturing the substrate. Also, it is preferable that the first step should be executed by a physical vapor deposition, and the second step should be executed by a spin coating method.

Also, a data recording method according to the present invention of recording data by irradiating a laser beam onto the optical recording medium set forth in any one of claims 1 to 5 from the light incident plane side, λ/NA is set to 640 nm or less and a recording mark train containing a recording mark whose length is λ/4NA or less is recorded, where λ is a wavelength of the laser beam and NA is a numerical aperture of an objective lens used to converge the laser beam. Also, a data reading method according to the present invention of reading data by irradiating a laser beam onto the optical recording medium set forth in any one of claims 1 to 5 from the light incident plane side, λ/NA is set to 640 nm or less and data are read from a recording mark train containing a recording mark whose length is λ/4NA or less, where λ is a wavelength of the laser beam and NA is a numerical aperture of an objective lens used to converge the laser beam. In both cases, it is most preferable that a wavelength of the laser beam should be set to about 405 nm and also a numerical aperture of the objective lens should be set to about 0.85. According to this, since the same recording/ reading system as the recording/reading system for the next-generation optical recording medium can be employed, a development cost and a production cost required for the recording/reading system can be suppressed.

According to the present embodiment, because the groove is set relatively deep on the substrate, the good signal characteristics can be obtained in carrying out the super-resolution recording and the super-resolution reading. In addition, when the groove is set relatively narrow on the substrate, the better signal characteristics can be obtained.

In particular, in the optical recording medium according to the present embodiment, since the laser beam whose wavelength is below about 635 nm and the objective lens whose numerical aperture is in excess of about 0.6 are employed, the super-resolution recording and the super-resolution reading can be carried out while setting λ/NA to 640 nm or less. Especially, the excellent characteristics can be obtained in the super-resolution recording and the super-resolution reading using the laser beam having a wavelength of about 405 nm and the objective lens having the numerical aperture of about 0.85, both are employed in the next-generation optical recording medium. As a result, since the recording/reading system similar to the recording/reading system for the next-generation optical recording medium can be employed, a development cost and a production cost required for the recording/reading system can be suppressed.

<Brief Description of the Drawings>

Fig.1(a) is a notched perspective view showing an external appearance of an optical recording medium 10 according to a preferable embodiment of the present invention, and Fig. 1(b) is an enlarged fragmental sectional view of an A portion shown in Fig. 1(a).

Fig.2 is a view explaining a definition of a depth Gd and a width Gw of a groove 11a.

Fig. 3 is a view showing schematically a state that a laser beam 40 is irradiated onto the optical recording medium 10.

Fig.4(a) is a plan view showing a beam spot of the laser beam 40 on a noble metal oxide layer 23, and Fig.4(b) is a view showing its intensity distribution.

Fig.5 is a view explaining a size of a bubble pit 23a (recording mark).

Fig. 6 is a waveform diagram showing an example of an intensity modulation pattern of the laser beam 40 in a recording operation.

Fig. 7 is a waveform diagram showing another example of the intensity modulation pattern of the laser beam 40 in the recording operation.

Fig. 8 is a graph showing schematically a relationship between a recording power of the laser beam 40 and a CNR of a read signal obtained by the later readout.

Fig.9 is a graph showing schematically a relationship between a reading power of the laser beam 40 and the CNR.

Fig.10 is a graph showing measurement results in the characteristic evaluation 1.

Fig.11 is a graph showing measurement results in the characteristic evaluation 2.

Fig.12 is a graph showing measurement results in the characteristic evaluation 3.

Fig.13 is a graph showing measurement results in the characteristic evaluation 4.

Fig.14 is a graph showing measurement results in the characteristic evaluation 5.

Fig.15 is a graph showing measurement results in the characteristic evaluation 6.

Fig.16 is a graph showing measurement results in the characteristic evaluation 7.

Fig.17 is a graph showing measurement results in the characteristic evaluation 8.

<Best Mode for Carrying Out the Invention>

A preferred embodiment of the present invention will be explained with reference to the accompanying drawings hereinafter.

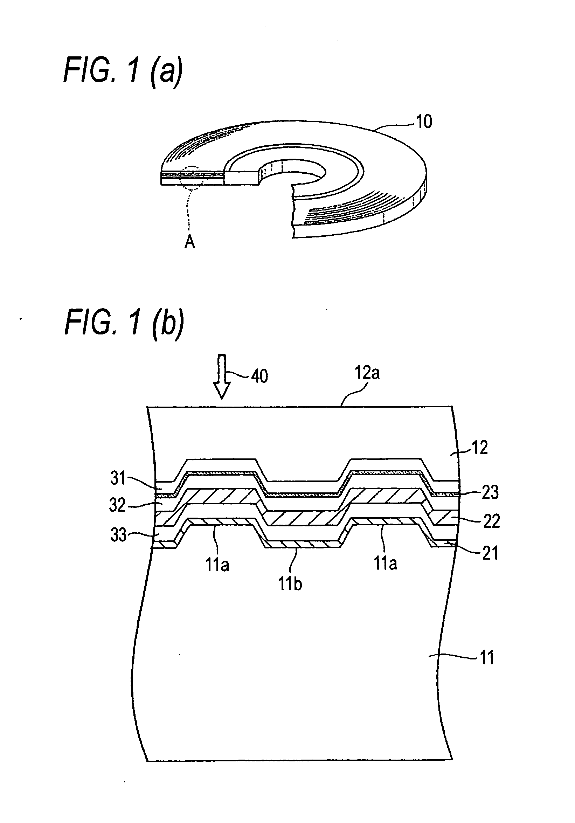

Fig.1(a) is a notched perspective view showing an external appearance of an optical recording medium 10 according to a preferable embodiment of the present invention, and Fig. 1(b) is an enlarged fragmental sectional view of an A portion shown in Fig.1(a).

As shown in Fig. 1(a), an optical recording medium 10 according to the present embodiment is formed like a circular disk. As shown in Fig. 1(b), the optical recording medium 10 is constructed to have a supporting substrate 11, a light transmitting layer 12, a reflecting layer 21, a light absorbing layer 22, and a noble metal oxide layer 23 provided in this order between the supporting substrate 11 and the light transmitting layer 12, and dielectric layers 33, 32, and 31 provided between the reflecting layer 21 and the light absorbing layer 22, between the light absorbing layer 22 and the noble metal oxide layer 23, and between the noble metal oxide layer 23 and the light transmitting layer 12 respectively. The recording and readout of data can be carried out by irradiating a laser beam 40 from the light incident plane 12a side while turning the optical recording medium 10. A wavelength of the laser beam 40 can be set below 635 nm. In particular, it is most preferable that the wavelength should be set to almost 405 nm used in the next-generation optical recording medium. Also, a numerical aperture of an objective lens used to converge the laser beam 40 can be set to 0.6 or more. In particular, the numerical aperture can be set to almost 0.85 used in the next-generation optical recording medium. In this specification and claims, the supporting substrate 11 is also called simply the "substrate" in some cases.

The supporting substrate 11 is a circular disk-like substrate used to ensure a mechanical strength that is required of the optical recording medium 10. A groove 11a and a land 11b for guiding the laser beam 40 are formed spirally on one surface to direct from a near-center portion to an outer peripheral portion or from the outer peripheral portion to the near-center portion. The material and a thickness of the supporting substrate 11 are not particularly limited so long as the mechanical strength can be ensured. As the material of the supporting substrate 11, for example, glass, ceramics, resin, or the like can be used. It is preferable that the resin should be employed if the moldability is considered. As such resin, polycarbonate resin, olefin resin, acrylic resin, epoxy resin, polystyrene resin, polyethylene resin, polypropylene resin, silicon resin, fluorinated resin, ABS resin, urethane resin, and the like may be listed. Out of them, it is particularly preferable from a respect of workability that the polycarbonate resin or the olefin resin should be employed. In this case, since the supporting substrate 11 does not act as the optical path of the laser beam 40, there is no need that the material with a high light transmittance in that wavelength range should be selected.

On the contrary, it is preferable that a thickness of the supporting substrate 11 should be set to a necessary and sufficient thickness to ensure a mechanical strength, for example, 0.6 mm or more but 2.0 mm or less. In case the compatibility of this medium with the existing optical recording medium or the next-generation optical recording medium is considered, it is preferable that the thickness should be set to 1.2 mm or less, particularly about 1.1 mm. Also, a diameter of the supporting substrate 11 is not particularly limited. In case the compatibility of this medium with the existing optical recording medium or the next-generation optical recording medium is considered, it is preferable that the diameter should be set to about 120 mm.

A depth of the groove 11a is set in excess of $\lambda/8n$, preferably should be set to $\lambda/7n$ or more, where $\lambda$ is a wavelength of the laser beam 40 and n is a refractive index of the light transmitting layer 12 in the relevant wavelength range. Thus, when the wavelength of the laser beam 40 is set to about 405 nm, which is applied to the next-generation optical recording medium, and the refractive index of the light transmitting layer 12 in the relevant wavelength range is about 1.5, the depth of the groove 11a may be set to about 34 nm, preferably about 39 nm or more. If the depth of the groove 11a is set in excess of $\lambda/8n$, the good signal characteristic, especially a push-pull signal with an enough amplitude can be obtained when the super-resolution recording and the super-resolution reading are executed whereas, if the depth of the groove 11a is set to $\lambda/7n$ or more, the better signal characteristic can be obtained when the super-resolution recording and the super-resolution reading are executed. In this event, in the optical recording medium having the substrate on which the groove and the land are formed, it is known that an amplitude of the push-pull signal can be maximized by setting the depth of the groove to $\lambda/8n$. In view of this respect, it is possible to say that the groove 11a of the optical recording medium 10 in the present embodiment is set deeper than the depth of the groove in the normal optical recording medium.

The reason why the push-pull signal with an enough amplitude can be obtained by setting the depth of the groove 11a in excess of $\lambda/8n$ that is deeper than ordinary one may be mentioned like that, since a bubble generated by local resolution of the noble metal oxide layer 23 is employed as the recording mark in the optical recording medium of the present invention, the substantial groove depth of the recording track can be reduced rather than the groove depth of the unrecorded track. Therefore, it may be concluded that such a phenomenon that the push-pull signal with an enough amplitude can be obtained by setting the depth of the groove 11a in excess of $\lambda/8n$ is peculiar to the optical recording medium to which the super-resolution recording and the super-resolution reading can be applied.

In this case, it becomes difficult gradually to produce a stamper when the depth of the groove 11a is increased. In light of this respect, preferably the depth of the groove 11a should be set to 60 nm or less, and more preferably the depth of the groove 11a should be set to 50 nm or less.

Also, preferably a width of the groove 11a should be set narrower than ordinary one. For example, it is preferable that, when a track pitch is about 320 nm, the width of the groove should be set to 200 nm or less, particularly 170 nm or less. The reason why it is preferable to set the width of the groove 11a narrow is not always clear. But it is guessed that, when the width of the groove 11 a is narrowed, a deformation of the noble metal oxide layer 23 in the horizontal direction can be suppressed by the light transmitting layer 12 positioned over the land 11b and as a result a deformation in the vertical direction is increased to improve the signal characteristic.

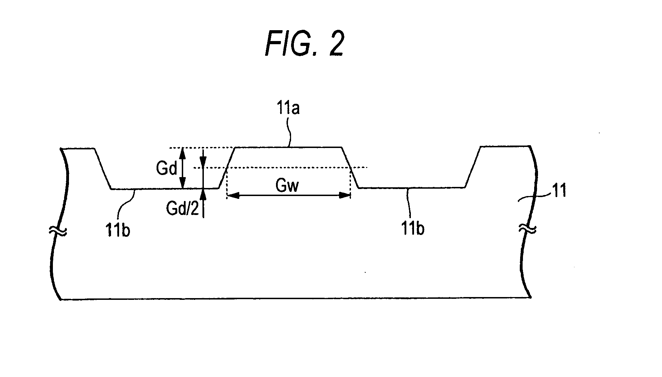

Here, as shown in Fig. 2, the depth of the groove 11 a is defined by a distance (=Gd) from a flat surface of the groove 11a to a flat surface of the land 11b in the vertical direction. Also, the width of the groove 11a is defined by a distance (=Gw) in the horizontal direction obtained when portions of slant surfaces of the groove 11 a, which has a depth of Gd/2, are connected mutually, i.e., by a half width.

The light transmitting layer 12 is a layer that acts as an optical path of the laser beam 40 that is irradiated at a time of recording and recording. The material is not particularly limited as far as such material has a sufficiently high light transmittance in the wavelength range of the employed laser beam 40. For example, a light transmissible resin, or the like may be employed. In the optical recording medium 10 of the present embodiment, a thickness of the light transmitting layer 12 is set to 10 $\mu$m or more but 200 $\mu$m or less. This is because, when the thickness of the light transmitting layer 12 is set below 10 $\mu$m, a beam diameter on the light incident plane 12a becomes very small and then an influence of a scratch or a dust on the light incident plane 12a on the recording and reading operations are excessively increased and because, when the thickness of the light transmitting layer is set over 200 $\mu$m, it is difficult to ensure a tilt margin and suppress a coma aberration. Also, when the compatibility with the next-generation optical recording medium is taken into account, the thickness of the light transmitting layer should be set preferably to 50 $\mu$m or more but 250 $\mu$m or less, and more preferably to 70 $\mu$m or more but 120 $\mu$m or less.

The reflecting layer 21 is a layer that fills the role to not only enhance a read signal level but also improve reproduction stability. As the material of the reflecting layer 21, a single metal such as gold (Au), silver (Ag), copper (Cu), platinum (Pt), aluminum (Al), titanium (Ti), chromium (Cr), iron (Fe), cobalt (Co), nickel (Ni), magnesium (Mg), zinc (Zn), germanium (Ge), or the like or their alloy may be employed. A thickness of the reflecting layer 21 is not particularly limited. But preferably the thickness should be set to 5 nm or more but 200 nm or less, more preferably the thickness should be set to 10 nm or more but 100 nm or less, and most preferably the thickness should be set to 10 nm or more but 50 nm or less. This is because an effect of improving the reproduction stability cannot be sufficiently achieved when the thickness of the reflecting layer 21 is below 5 nm, while it takes much time to form a film and thus productivity is lowered but an effect of improving the reproduction stability can hardly be achieved beyond the above when the thickness of the reflecting layer 21 exceeds 200 nm. On the contrary, if the thickness of the reflecting layer 21 is set to 10 nm or more but 100 nm or less, particularly 10 nm or more but 50 nm or less, a satisfactory effect of improving the reproduction stability can be achieved not to lower largely the productivity. In the present invention, it is not indispensable that the reflecting layer 21 is provided to the optical recording medium, but the above effect can be achieved by providing this reflecting layer.

The light absorbing layer 22 is a layer that is considered to function as the "recording layer" in the prior art. Actually this light absorbing layer 22 fills mainly the role to absorb an energy of the laser beam 40 and convert this energy into a heat. As the material of the light absorbing layer 22, it is preferable that the material that has a large absorption in the wavelength range of the employed laser beam 40 and has a hardness not to interrupt a deformation of the noble metal oxide layer 23 in the recording operation should be employed. As the material that satisfies such conditions of the laser beam 40 whose wavelength is below 635 nm, phase change material used as the material of the recording layer in the rewritable optical recording medium can be listed. As the phase change material, preferably either an alloy consisting of antimony (Sb) and tellurium (Te) or the material obtained by adding an additive to this alloy or an alloy consisting of antimony (Sb), tellurium (Te), and germanium (Ge) or the material obtained by adding an additive to this alloy should be employed as a principal component. What the wording "as a principal component" intends to mean is that it doesn't matter if a small quantity (15 mol % or less) of other material or an inevitably mixed impurity is contained. As such material, either the material expressed by

$$(Sb_aTe_{1-a})_{1-b}MA_b$$

where MA is an element except antimony (Sb) and tellurium (Te), $0 \leq a \leq 1$, and $0 \leq b < 1$, or the intermetallic compound-based phase change material expressed by

$$\{(GeTe)_c(Sb_2Te_3)_{1-c}\}_dMB_{1-d}$$

where MA is an element except antimony (Sb), tellurium (Te), and germanium (Ge), c=1/3, 1/2 or 2/3, $0 < d \leq 1$ may be listed. Here, the intermetallic compound-based phase change material expressed by c=1/3, 1/2 or 2/3 may be expressed as $Ge_1Sb_4Te_7$, $Ge_1Sb_2Te_4$, and $Ge_2Sb_2Te_5$ respectively when an atomic ratio is expressed by the simplest integer ratio.

In this case, more preferably
$0 \leq a \leq 1$, and $0 \leq b \leq 0.15$, or
$1/3 \leq c \leq 2/3$, and $0.9 \leq d$
should be set.

In particular, when a value b exceeds 0.15, it is possible that a light absorption coefficient is degraded lower than a value required for the light absorbing layer 22 and also it is possible that a thermal conductivity is degraded lower than a value required for the light absorbing layer 22. Therefore, this value is not preferable.

The type of the element MA is not particularly limited. But it is preferable that one or two elements or more selected from a group consisting of germanium (Ge), indium (In), silver (Ag), gold (Au), bismuth (Bi), selenium (Se), aluminum (Al), phosphorus (P), hydrogen (H), silicon (Si), carbon (C), vanadium (V), tungsten (W), tantalum (Ta), zinc (Zn), manganese (Mn), titanium (Ti), tin (Sn), palladium (Pd), lead (Pb), nitrogen (N), oxygen (O), and rare earth elements (scandium (Sc), yttrium (Y), and lanthanoids) should be selected. In particular, when the laser beam having a wavelength of 390 nm to 420 nm is employed, it is preferable that one or two elements or more selected from a group consisting of silver (Ag), germanium (Ge), indium (In), and rare earth elements should be selected as the element MA. Accordingly, the good signal characteristics can be obtained when the laser beam having a wavelength of 390 nm to 420 nm, especially the laser beam having a wavelength of almost 405 nm, is employed.

Also, the type of the element MB is not particularly limited. But it is preferable that one or two elements or more selected from a group consisting of indium (In), silver (Ag), gold (Au), bismuth (Bi), selenium (Se), aluminum (Al), phosphorus (P), hydrogen (H), silicon (Si), carbon (C), vanadium (V), tungsten (W), tantalum (Ta), zinc (Zn), manganese (Mn), titanium (Ti), tin (Sn), palladium (Pd), lead (Pb), nitrogen (N), oxygen (O), and rare earth elements (scandium (Sc), yttrium (Y), and lanthanoids) should be selected. In particular, when the laser beam having a wavelength of 390 nm to 420 nm is employed, it is preferable that one or two elements or more selected from a group consisting of silver (Ag), indium (In), and rare earth elements should be selected as the element MB. Accordingly, the good signal characteristics can be obtained when the laser beam having a wavelength of 390 nm to 420 nm, especially the laser beam having a wavelength of almost 405 nm, is employed.

As a principle component of the light absorbing layer 22, preferably the phase change material that is expressed by

$$(Sb_a Te_{1-a})_{1-b} MA_b$$

and satisfies $0 < a < 1$ should be selected from the above phase change materials, and more preferably the material that satisfies $0 < a < 1$ and $0 \leq b \leq 0.15$ should be selected. This is because the material satisfying the above conditions has a high ductility rather than the intermetallic compound-based phase change material that is expressed by

$$\{(GeTe)_c (Sb_2 Te_3)_{1-c}\}_d MB_{1-d}.$$

Therefore, if the foregoing phase change material is employed as a principal component of the light absorbing layer 22, the local deformation of the noble metal oxide layer 23 is not interrupted. As a result, the good signal characteristics can be obtained even when a small recording mark is formed.

In this case, even though the phase change material is employed as the material of the light absorbing layer 22, the phase change due to a recording operation seldom appears as a signal. It is for this reason that employment of the phase change material as the material of the light absorbing layer 22 is not essential. However, it has been confirmed at this time by the inventors of the present invention that the best signal characteristics can be obtained when the phase change material, especially the phase change material having the above composition, is employed as the material of the light absorbing layer 22.

Preferably a thickness of the light absorbing layer 22 should be set to 5 nm or more but 100 nm or less, more preferably the thickness should be set to 10 nm or more but 80 nm or less, and particularly preferably the thickness should be set to 10 nm or more but 60 nm or less. This is because, when the thickness of the light absorbing layer 22 is set below 5 nm, it is feared that such layer cannot sufficiently absorb an energy of the laser beam 40 and because, when the thickness exceeds 100 nm, it takes much time to form the layer and the productivity is lowered. In contrast, when the thickness of the light absorbing layer 22 is set to 10 nm or more but 80 nm or less, particularly 10 nm or more but 60 nm or less, such layer can sufficiently absorb an energy of the laser beam 40 while maintaining the high productivity.

In the present invention, it is not essential to provide the light absorbing layer 22 on the optical recording medium. However, as described above, an energy of the laser beam 40 can be effectively converted into a heat when this layer is provided.

The noble metal oxide layer 23 is a layer on which the recording mark is formed by the irradiation of the laser beam 40, and contains the oxide of the noble metal as a principal component. The type of the noble metal is not particularly limited. But at least one type of platinum (Pt), silver (Ag), and palladium (Pd) is preferable, and platinum (Pt) is particularly preferable. That is, it is particularly preferable that platinum oxide (PtOx) should be employed as the material of the noble metal oxide layer 23. When the platinum oxide (PtOx) is employed as the material of the noble metal oxide layer 23, the satisfactory signal characteristics and the sufficient durability can be obtained. It is preferable that, when the platinum oxide (PtOx) is employed as the material of the noble metal oxide layer 23, a value x should be set such that an extinction coefficient (k) is below 3 (k<3) in the wavelength range of the employed laser beam 40.

A thickness of the noble metal oxide layer 23 has a great influence on the signal characteristics. In order to attain the good signal characteristics, preferably the thickness should be set to 2 nm or more but 50 nm or less, and more preferably the thickness should be set to 2 nm or more but 30 nm or less. In order to attain the particularly excellent signal characteristics, preferably the thickness should be set to 2 nm or more but 8 nm or less, more preferably the thickness should be set to 3 nm or more but 6 nm or less, and most preferably the thickness should be set to about 4 nm. This is because, when the thickness of the noble metal oxide layer 23 is set below 2 nm or in excess of 50 nm, it is feared that the recording mark with a good profile cannot be formed when the laser beam 40 is irradiated and thus a sufficient carrier-to-noise ratio (CNR) cannot be obtained. In contrast, when the thickness of the noble metal oxide layer 23 is set to 3 nm or more but 30 nm or less, particularly about 4 nm, the recording mark with a good profile can be formed and also a high CNR can be obtained.

The dielectric layers 31, 32, and 33 have the role mainly to protect physically and chemically respective layers adjacent to these layers and adjust the optical characteristics. In this specification and claims, in some cases the dielectric layers 31, 32, and 33 are also called first, second, and third dielectric layers respectively. As the material of the dielectric layers 31, 32, and 33, oxide, sulfide, nitride, or their combination can be employed as a principal component. More concretely, it is preferable that oxide, nitride, sulfide, carbide, or their mixture of aluminum (Al), silicon (Si), cerium (Ce), titanium (Ti), zinc (Zn), tantalum (Ta), or the like such as $Al_2O_3$, AlN, ZnO, ZnS, GeN, GeCrN, $CeO_2$, SiO, $SiO_2$, $Si_3N_4$, SiC, $La_2O_3$, TaO, $TiO_2$, SiAlON (a mixture of $SiO_2$, $Al_2O_3$, $Si_3N_4$, and AlN), and LaSiON (a mixture of $La_2O_3$, $SiO_2$, and $Si_3N_4$), or the like should be employed. It is more preferable that a mixture of ZnS and $SiO_2$ should be employed. In this case, preferably a rate of ZnS should be set to 70 mol% or more but 90 mol% or less and a rate of $SiO_2$ should be set to 10 mol% or more but 30 mol% or less, and most preferably a mole ratio of ZnS and $SiO_2$ should be set to almost 80:20.

The dielectric layers 31, 32, and 33 may be composed of the same material mutually, or a part or all of these layers may be composed of different materials. Further, at least one of dielectric layers 31, 32, and 33 may be formed as a multi-layered structure that consists of a plurality of layers.

Preferably a thickness of the dielectric layer 33 should be set to 10 nm or more but 140 nm or less, and more preferably the thickness should be set to 20 nm or more but 120 nm or less. This is because it is possible that the light absorbing layer 22 cannot be sufficiently protected when the thickness of the dielectric layer 33 is below 10 nm whereas much time is required to form the layer and the productivity is lowered when the thickness of the dielectric layer 33 exceeds 140 nm. In contrast, when the thickness of the dielectric layer 33 is set to 20 nm or more but 120 nm or less, the light absorbing layer 22 can be effectively protected while keeping the high productivity.

Preferably a thickness of the dielectric layer 32 should be set to 5 nm or more but 100 nm or less, and more preferably the thickness should be set to 20 nm or more but 100 nm or less. This is because, when the thickness of the dielectric layer 32 is below 5 nm, it is possible that such dielectric layer is broken down during the resolution of the noble metal oxide layer 23 and thus the noble metal oxide layer 23 cannot be protected and because, when the thickness of the dielectric layer 32 exceeds 100 nm, it is possible that the noble metal oxide layer 23 cannot be sufficiently deformed at a time of recording. In contrast, when the thickness of the dielectric layer 32 is set to 20 nm or more but 100 nm or less, the deformation in the recording operation is never excessively interrupted while protecting sufficiently the noble metal oxide layer 23. Also, the thickness of the dielectric layer 32 exerts an influence upon the signal characteristics at a time of reading. When the thickness of the dielectric layer 32 is set to 50 nm or more but 70 nm or less, especially about 60 nm, the high CNR can be obtained.

A thickness of the dielectric layer 31 may be decided in response to a required reflectance as far as such layer can protect sufficiently the noble metal oxide layer 23. For example, preferably the thickness should be set to 30 nm or more but 120 nm or less, more preferably the thickness should be set to 50 nm or more but 100 nm or less, and particularly preferably the thickness should be set to about 70 nm. This is because, when the thickness of the dielectric layer 31 is below 30 nm, it is possible that such dielectric layer cannot sufficiently protect the noble metal oxide layer 23 and because, when the thickness of the dielectric layer 31 exceeds 120 nm, it is possible that it takes much time to form the layer and thus the productivity is lowered. In contrast, when the thickness of the dielectric layer 31 is set to 50 nm or more but 100 nm or less, especially about 70 nm, such dielectric layer can protect sufficiently the noble metal oxide layer 23 while maintaining the high productivity.

With the above, a structure of the optical recording medium 10 is explained.

In the manufacture of the optical recording medium 10 having such structure, first the supporting substrate 11 is prepared, and then the reflecting layer 21, the dielectric layer 33, the light absorbing layer 22, the dielectric layer 32, the noble metal oxide layer 23, the dielectric layer 31, and the light transmitting layer 12 are formed sequentially on the surface on the side on which the groove 11a and the land 11b are formed. That is, in the manufacture of the optical recording medium 10, respective films are formed sequentially from the opposite side to the light incident plane 12a, like the next-generation optical recording medium.

In forming the reflecting layer 21, the dielectric layer 33, the light absorbing layer 22, the dielectric layer 32, the noble metal oxide layer 23, and the dielectric layer 31, the chemical vapor deposition using chemical species containing these constitutive elements, e.g., the sputtering method or the vacuum deposition method can be employed. Among them, it is preferable to employ the sputtering method. Meanwhile, in forming the light transmitting layer 12, for example, an acrylic or epoxy ultraviolet curing resin whose viscosity has been adjusted is coated by the spin coating method, and then the resin is cured by irradiating the ultraviolet rays in a nitrogen atmosphere. In this case, the light transmitting layer 12 may be formed by using a light transmissible sheet containing a light transmissible resin as a principal component and various adhesives and binders instead of the spin coating method.

Here, a hard coat layer may be provided on the surface of the light transmitting layer 12 and thus the surface of the light transmitting layer 12 may be protected by this layer. In this case, the surface of the hard coat layer constitutes the light incident plane 12a. As the material of the hard coat layer, for example, the ultraviolet curing resin containing epoxyacrylater oligomer (bifunctional oligomer), multifunctional oligomer, monofunctional acrylic monomer, and photopolymerization initiator, or oxide, nitride, sulfide, carbide, or their mixture of aluminum (Al), silicon (Si), cerium (Ce), titanium (Ti), zinc (Zn), tantalum (Ta), or the like may be employed. In case the ultraviolet curing resin is employed as the material of the hard coat layer, preferably this resin should be formed on the light transmitting layer 12 by the spin coating method. In case the oxide, the nitride, the sulfide, the carbide, or their mixture is employed, the chemical vapor deposition using the chemical seeds containing these constitutive elements, e.g., the sputtering method or the vacuum deposition method can be employed. It is preferable to employ the sputtering method among them.

Also, preferably an antifouling function should be enhanced by providing lubricity to the hard coat layer to prevent the adhesion of stain. In order to provide the lubricity to the hard coat layer, it is effective to include a lubricant in the material serving as a mother body of the hard coat layer. As the lubricant, preferably silicon-based lubricant, fluorine-based lubricant, or fatty acid ester-based lubricant should be selected. A quantity of content should be set to 0.1 mass % or more but 5.0 mass % or less.

Next, a method of recording data on the optical recording medium 10 according to the present embodiment and the recording principle will be explained hereunder.

The data recording onto the optical recording medium 10 is executed by irradiating the laser beam 40, which has a wavelength below 635 nm, especially a wavelength of about 405 nm used in the next-generation optical recording medium, onto the noble metal oxide layer 23 from the light incident plane 12a side, while turning the optical recording medium 10. In this case, an objective lens having a numerical aperture in excess of 0.6, especially a numerical aperture of about 0.85 used in the next-generation optical recording medium, can be employed to converge the laser beam 40. That is, the data recording can be carried out by using the optical system similar to the optical system used in the next-generation optical recording medium.

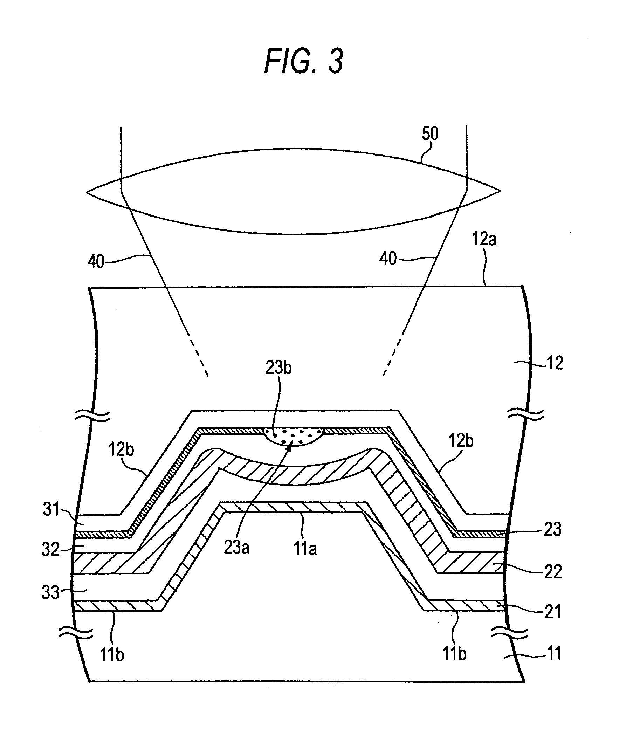

Fig.3 is a rough sectional view showing schematically a situation that the laser beam 40 is irradiated onto the optical recording medium 10 along the groove 11a.

As shown in Fig.3, when the laser beam 40 having the above wavelength is converged by an objective lens 50 having the above numerical aperture and then irradiated onto the optical recording medium 10, the noble metal oxide layer 23 is resolved at a center portion of the beam spot and then a bubble pit 23a in which an oxygen gas ($O_2$) is filled is formed. Particles 23b of raw metal are scattered in the inside of the bubble pit 23a. At this time, since respective layers existing around the bubble pit 23a are plastically deformed by its pressure, this bubble pit 23a can be employed as the irreversible recording mark. For example, in case the material of the noble metal oxide layer 23 is the platinum oxide (PtOx), this platinum oxide (PtOx) is resolved into the platinum (Pt) and the oxygen gas ($O_2$) at the center portion of the beam spot, and then the particles of the platinum (Pt) are scattered into the bubble pit 23a. A portion of the noble metal oxide layer 23, in which the bubble pit 23 a is not formed, acts as a blank area.

When the bubble pit 23 a is generated by the resolution of the noble metal oxide layer 23, the plastic deformation is generated on the supporting substrate 11 side, i.e., on the light absorbing layer 22 in the horizontal direction, as shown in Fig.3, but the plastic deformation is hardly generated on the light transmitting layer 12 side. This is because the light absorbing layer 22 absorbs the light and converts this light into a heat and then this heat causes the resolving reaction of the noble metal oxide layer 23. When a width of the groove 11 a is set narrow, the deformation in the horizontal direction is suppressed by a wall surface portion 12b of the light transmitting layer 12 and as a result the deformation in the vertical direction can be increased. Since the signal characteristics in the super-resolution optical recording medium according to the present invention become better as the deformation in the vertical direction is increased larger, such signal characteristics can be improved by setting the width of the groove 11a narrowly.

The resolution of the noble metal oxide layer 23 is generated not in the overall beam spot but at the center portion of the beam spot only, as described above. Therefore, the formed bubble pit 23 a (recording mark) is small in contrast to a beam spot diameter, and accordingly the super-resolution recording can be realized. The reason why such super- resolution recording can be executed will be given as follows.

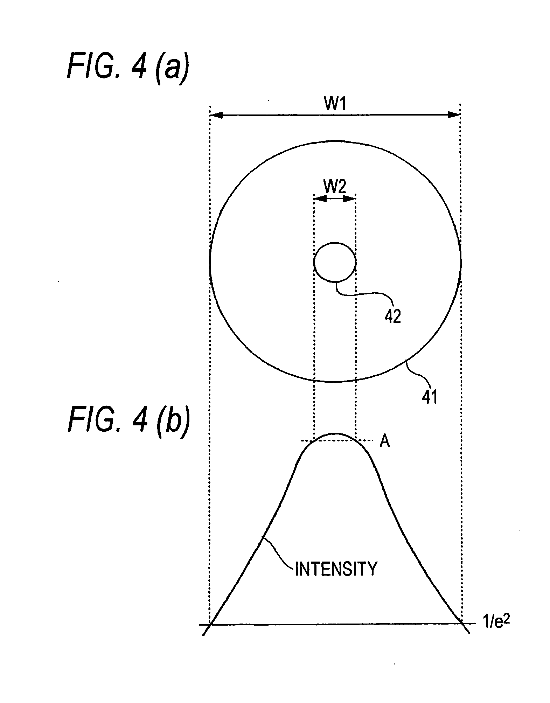

Fig.4(a) is a plan view showing a beam spot of the laser beam 40 on the noble metal oxide layer 23, and Fig.4(b) is a view showing an intensity distribution of the beam spot.

As shown in Fig.4(a), a planar shape of a beam spot 41 is almost circular, but the intensity distribution of the laser beam 40 in the beam spot 41 is not uniform and has a Gaussian distribution as shown in Fig.4(b). That is, the beam spot 41 has a higher energy toward its center portion. Consequently, if a predetermined threshold value A that exceeds sufficiently a maximum intensity $1/e^2$ is set, a diameter W2 of an area 42 that has an intensity in excess of the threshold value A becomes sufficiently smaller than a diameter W1 of the beam spot 41. This means that, suppose the noble metal oxide layer 23 has such a characteristic that the area is resolved when the laser beam 40 having an intensity in excess of the threshold value A is irradiated, the bubble pit 23 a (recording mark) can be formed selectively only in the portion, on which the laser beam 40 is irradiated and which corresponds to the area 42 of the beam spot 41.

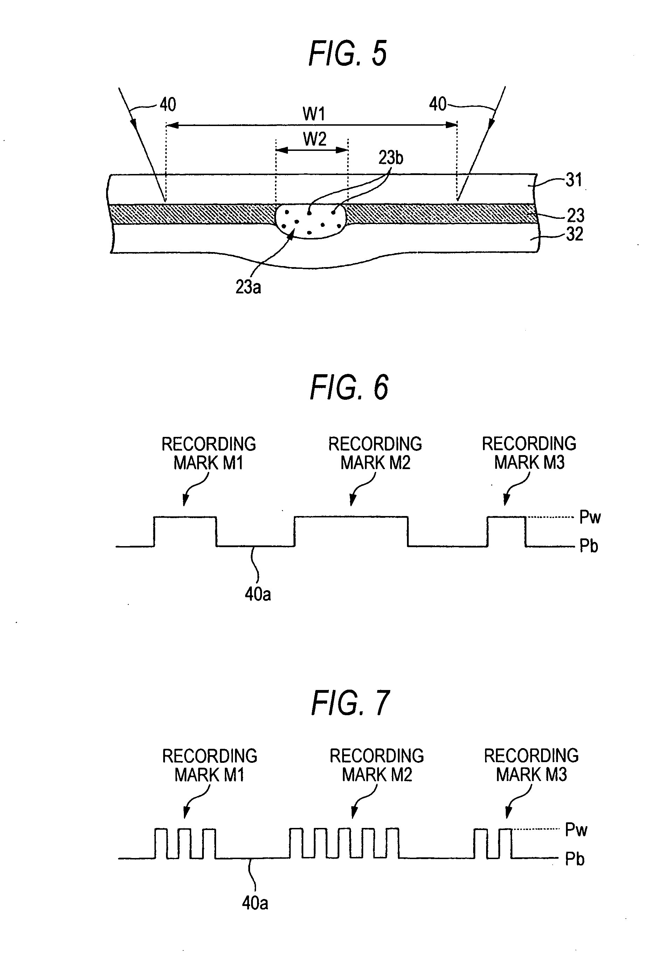

Accordingly, as shown in Fig. 5 as a rough section taken along the groove 11 a and the land 11b, the bubble pit 23 a (recording mark) that is sufficiently smaller than the diameter W1 of the beam spot can be formed in the noble metal oxide layer 23 and its diameter becomes almost W2. That is, a relationship between the apparent beam spot diameter W2 and the actual beam spot diameter W 1 is given by

$$W1 > W2$$

and the super-resolution recording can be realized. Here, since the platinum oxide (PtOx) that is the most desirable material as the material of the noble metal oxide layer 23 has such a characteristic that this platinum oxide is decomposed when it is heated at 580 °C, the intensity at which the noble metal oxide layer 23 is heated up to 580 °C or more by the irradiation gives the threshold value A. In the present invention, because the material the above thermal conductivity of which is high to some extent is selected as the material of the dielectric layer 32, the area whose temperature exceeds 580 °C is not excessively expanded. As a result, the small recording mark with a good shape can be formed.

Therefore, when the laser beam 40 that is subjected to the intensity modulation is irradiated along the groove 11a and/or the land 11b while turning the optical recording medium 10, the fine recording mark whose size is below the reading limit can be formed in a desired portion of the noble metal oxide layer 23.

Fig.6 is a waveform diagram showing an example of an intensity modulation pattern of the laser beam 40 at a time of recording. As shown in Fig.6, as an intensity 40a of the laser beam 40 at a time of recording, a power may be set to a recording power (=Pw1) in areas in which recording marks M1, M2, M3... are to be formed and may be set to a ground power (=Pb) in areas (blank areas) in which no recording mark is to be formed. Thus, since the bubble pit 23a is formed in the area, onto which the laser beam 40 having a recording power Pw is irradiated, of the noble metal oxide layer 23 because of the resolution, the recording marks M1, M2, M3... each having a desired length can be formed. Here, the intensity modulation pattern of the laser beam 40 at a time of recording is not limited to the pattern shown in Fig.6. For example, as shown in Fig. 7, the recording marks M1, M2, M3... may be formed by using the multi pulse train.

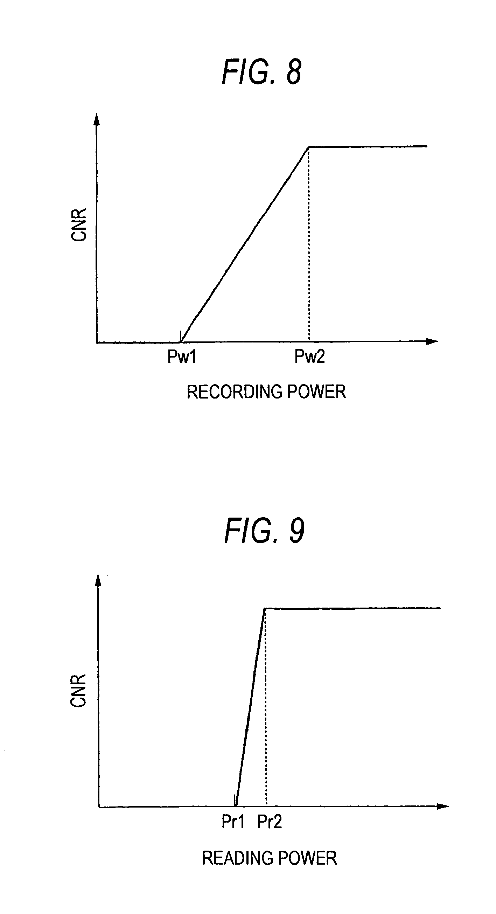

Fig. 8 is a graph showing schematically a relationship between a recording power of the laser beam 40 and CNR of a read signal obtained by the later readout.

As shown in Fig.8, when the recording power of the laser beam 40 is below Pw1, an effective read signal cannot be obtained in the optical recording medium 10 by the later readout. The reason for this may be considered such that the noble metal oxide layer 23 is not substantially resolved when the recording power of the laser beam 40 is below Pw1. Also, in the area in which the recording power of the laser beam 40 is Pw1 or more but below Pw2 (>Pw1), the higher recording power can give the higher CNR in the later readout. The reason for this may be considered such that the resolution of the noble metal oxide layer 23 is generated partially in the area in which the recording power of the laser beam 40 is Pw1 or more but below Pw2, so that a quantity of resolution becomes larger as the recording power goes higher. Also, in the area in which the recording power of the laser beam 40 is Pw2 or more, the CNR obtained by the later readout is seldom changed even when the recording power is increased further more. The reason for this may be considered such that, when the recording power of the laser beam 40 is set to Pw2 or more, the noble metal oxide layer 23 is substantially completely resolved. With the above, it is possible to say that preferably the recording power of the laser beam 40 should be set to Pw2 or more.

The value Pw2 is different depending upon a structure of the optical recording medium 10 (material of respective layers, thickness of respective layers, and the like) and recording conditions (recording linear velocity, wavelength of the laser beam 40, and the like). In case the recording linear velocity is about 6.0 m/s, the wavelength of the laser beam 40 is about 405 nm, and the numerical aperture of the objective lens 50 is about 0.85, 5.0 mW≤Pw2≤9.0 mW. Also, Pw1×1.4≤Pw2≤Pw1×2.0 is given in connection with Pw1.

It is preferable that, in light of variation in production of the optical recording medium 10, fluctuation in power of the laser beam 40, etc., the actual recording power should be set higher than Pw2 by 0.3 mW or more.

This is because the actual recording power even if set higher than Pw2 does not cause real damage and thus a sufficient margin for Pw2 must be ensured. In this case, because the recording power that is set higher than it needs is useless, there is no necessity to set the actual recording power higher than Pw2 by 2.0 mW or more. From the above, it is possible to say that the actual recording power should be set to 5.3 mW (=5.0 mW+0.3 mW) or more but 11.0 mW (=9.0 mW+2.0 mW) or less.

With the above, the method of recording the data on the optical recording medium 10 and the recording principle are explained.

When the data recorded in this manner are to be read, the laser beam 40 which is fixed to a predetermined intensity (reading power=Pr) is irradiated along the groove 11a and/or the land 11b while turning the optical recording medium 10. Then, an electric signal responding to the recording mark train can be obtained by photoelectric-converting the resultant reflected light. The reason why such super-resolution reading can be realized is not always clear, but it is guessed that, when the laser beam 40 that is set to the reading power is irradiated, any interaction is caused between the laser beam 40 and the metal particles 23b existing in the bubble pit 23 a to make the super-resolution reading possible.

Fig. 9 is a graph showing schematically a relationship between the reading power of the laser beam 40 and the CNR.

As shown in Fig. 9, an effective reading signal is seldom obtained when the reading power of the laser beam 40 is below Pr1, but the CNR is increased sharply when the reading power is set to Pr1 or more and then the CNR is saturated when the reading power is increased up to Pr2 (>Pr1). The reason for such phenomenon is not always clear, but it is guessed that the interaction between the metal particles 23b and the light is generated or becomes conspicuous by the irradiation of the laser beam 40 that is set to Pr1 or more. Therefore, the reading power of the laser beam 40 must be set to Pr1 or more, and preferably the reading power should be set to Pr2 or more.

However, when the reading power is set excessively high, it is possible that the resolution of the noble metal oxide layer 23 occurs in the blank area. A serious degradation in the readout is caused by such resolution, and the data disappears as the case may be. In view of this respect, preferably the reading power of the laser beam 40 should be set to Pr2 or more but below Pw1.

The value Pr2 is different depending upon a structure of the optical recording medium 10 (material of respective layers, thickness of respective layers, and the like) and reading conditions (reading linear velocity, wavelength of the laser beam 40, and the like). In case the reading linear velocity is about 6.0 m/s, the wavelength of the laser beam 40 is about 405 nm, and the numerical aperture of the objective lens 50 is about 0.85, 1.0 mW≤Pr2≤3.0 mW. Also, Pr1×1.05≤Pr2≤Pr1×1.6 is given in connection with Pr1.

It is preferable that the actual reading power should be set higher than Pr2 by 0.1 mW or more but 0.3 mW or less. This is because, when the reading power is increased further more after such reading power exceeds Pr2, improvement of CNR cannot be attained but the degradation in readout is ready to occur and therefore the actual reading power must be set slightly higher than Pr2 to suppress the degradation in readout. Since normally a variation in power of the laser beam 40 whose output is in a range of 1 mW to 3 mW is below 0.1 mW, it is concluded that it is sufficient to set the actual reading power higher than Pr2 by 0.1 mW or more but 0.3 mW or less even after a variation in production of the optical recording medium 10, etc. are taken into account. From the above, it is possible to say that the actual reading power should be set to 1.1 mW (=1.0 mW+0.1 mW) or more but 3.3 mW (=3.0 mW+0.3 mW) or less.

Normally the reading power in the optical recording medium in the prior art is about 0.1 mW to 0.5 mW, and such a situation hardly takes place in the next-generation optical recording medium, which has two recording planes on one side, that the reading power is set in excess of about 0.8 mW. In view of these facts, it is understood that a reading power level in the present embodiment is considerably high rather than the optical recording medium in the prior art.

Also, preferably the actual reading power should be set to Pw×0.1≤Pr≤Pw×0.5 in connection with the actual recording power, and more preferably the actual reading power should be set to Pw×0.1≤Pr≤Pw×0.4. From this respect, it is also understood that a reading power level in the present embodiment is considerably high rather than the optical recording medium in the prior art.

It is preferable that respective values to be set actually as the recording power and the reading power should be saved in the concerned optical recording medium 10 as "set information". If the set information are saved in the optical recording medium 10, such set information are read by the optical recording/reading system when the user records or reads actually the data and then the recording power and the reading power can be decided based on the set information.

It is more preferable that not only the recording power and the reading power but also various information required to specify various conditions (linear velocity, and the like) needed when the data are recorded on or read from the optical recording medium 10 should be included as the set information. Such set information may be recorded as the wobble or the prebit, or may be recorded as the data on the noble metal oxide layer 23. Also, not only the information indicating directly various conditions required to record or read the data but also the information indicating indirectly the recording power and the reading power, and others by designating any of various conditions stored previously in the optical recording/ reading system may be provided.

As explained above, according to the present embodiment, λ/NA can be set to 640 nm or less by employing the laser beam having a wavelength below about 635 nm and the objective lens having the numerical aperture in excess of about 0.6, and thus the super-resolution recording and the super-resolution reading can be carried out. Especially, the excellent characteristics can be obtained in the super-resolution recording and the super-resolution reading using the laser beam having a wavelength of about 405 nm and the objective lens having the numerical aperture of about 0.85, both are employed in the next-generation optical recording medium. Accordingly, since the recording/reading system similar to the recording/reading system for the next-generation optical recording medium can be employed, a development cost and a production cost of the recording/reading system can be suppressed. In addition, since a depth Gd of the groove 11 a formed on the supporting substrate 11 is set in excess of λ/8n, preferably set to λ/7n or more, the good signal characteristic, especially the push-pull signal with an enough amplitude, can be obtained in the super-resolution recording and the super-resolution reading. A possibility that the optical recording medium is out of tracking can be largely reduced. In addition, if a width Gw of the groove 11a is set narrower than the ordinary width, the deformation of the noble metal oxide layer 23 caused by the recording in the vertical direction can be increased and thus the signal characteristics can be improved much more.

The present invention is not limited to the embodiments explained as above, and various variations can be applied within a scope of the invention set forth in claims. It is needless to say that these variations are contained within a scope of the present invention.

For example, the structure of the optical recording medium 10 shown in Fig. 1 merely illustrates the favorable structure of the optical recording medium according to the present invention, and the structure of the optical recording medium according to the present invention is not limited to the above structure. For example, one more noble metal oxide layer may be added to the supporting substrate 11 side when viewed from the light absorbing layer 22, otherwise one more phase change material layer may added to the light transmitting layer 12 side when viewed from the noble metal oxide layer 23.

In addition, the structure having the recording surface on both sides can be formed by providing various function layers such as the light absorbing layer 22, the noble metal oxide layer 23, and the like on both surfaces of the supporting substrate 11 respectively, otherwise the structure having two layers or more of recording surfaces on one side can be formed by stacking two layers or more of various function layers on one surface of the supporting substrate 11 via a transparent intermediate layer. Also, the optical recording medium 10 shown in Fig. 1 has the structure that has a high compatibility with the so-called next-generation optical recording medium. It is possible to provide the structure that has a high compatibility with the so-called DVD optical recording medium or the CD optical recording medium

Further, in the above embodiment, the noble metal oxide layer 23 is employed as the recording layer serving as a generation source of the bubble pit 23a, but a noble metal nitride layer may be employed in place of the noble metal oxide layer. In this case, at least one type of platinum (Pt), silver (Ag), and palladium (Pd) is preferable as the type of the noble metal, and platinum (Pt) is particularly preferable. That is, it is particularly preferable that platinum nitride (PtNx) should be selected. When the noble metal nitride layer is employed , the bubble pit 23 a is formed by a nitrogen gas ($N_2$) generated by the resolution. Since the nitrogen gas ($N_2$) is a very chemically stable gas, there is no chance that other layers are oxidized or eroded by this gas and therefore high saving reliability can be achieved.

Moreover, in the above embodiment, the noble metal oxide layer 23 is put between the dielectric layers 31, 32. When the excessive deformation of the mark portion formed by the resolution of the noble metal oxide layer 23 can be suppressed, the dielectric layer 31 can be omitted.

[Examples]

Examples of the present invention will be explained hereunder, but the present invention is not limited to these examples at all.

[Manufacture of Sample]

Example 1

Samples of the optical recording medium having the same structure as the optical recording medium 10 shown in Fig. 1 were manufactured by the following method.

First, the disc-like supporting substrate 11 made of polycarbonate, which has a thickness of about 1.1 mm and a diameter of about 120 mm and on the surface of which the groove 11a and the land 11b are formed, was manufactured by the injection molding method. A depth Gd of the groove 11 a was set to about 41 nm, and a width Gw of the groove 11a was set to about 169 nm. A track pitch was set to about 320 nm.

Then, the supporting substrate 11 was loaded in the sputtering equipment. Then, the reflecting layer 21 made substantially of platinum (Pt) and having a thickness of about 20 nm, the dielectric layer 33 made substantially of a mixture of ZnS and $SiO_2$ (mole ratio=about 80:20) and having a thickness of about 100 nm, the light absorbing layer 22 made of the phase change material represented substantially by $Sb_{74.1}Te_{25.9}$ (subscript values are % representation. This is true in the following except the case where atomic ratios are represented by simplest integer ratio) and having a thickness of about 20 nm, the dielectric layer 32 made substantially of a mixture of ZnS and $SiO_2$ (mole ratio=about 80:20) and having a thickness of about 60 nm, the noble metal oxide layer 23 made substantially of platinum oxide (PtOx) and having a thickness of about 4 nm, and the dielectric layer 31 made substantially of a mixture of ZnS and SiO$_2$ (mole ratio=about 80:20) and having a thickness of about 70 nm were formed sequentially on the surface on the side, on which the groove 11a and the land 11b are formed, by the sputter method.

Here, in forming the noble metal oxide layer 23, the platinum (Pt) was used as a target, an oxygen gas (O$_2$) and an argon gas (Ar) (flow rate ratio=1:3) were used as a sputter gas, a pressure in the chamber was set to 0.14 Pa, and a sputter power was set to 100 W. Accordingly, an extinction coefficient (k) of the formed platinum oxide (PtOx) was about 1.69.

Then, the acrylic ultraviolet curing resin was coated on the dielectric layer 31 by the spin coating method, and then the light transmitting layer 12 having a thickness of about 100 $\mu$m was formed by irradiating the ultraviolet rays onto this resin. Accordingly, the sample of the optical recording medium in Example 1 was completed.

The material of the light transmitting layer 12 used in the present example had a refractive index of 1.5 with respect to a light whose wavelength is 405 nm. Therefore, when the laser beam having $\lambda$=405 nm was employed, a depth Gd of the groove 11a was expressed substantially by Gd=$\lambda$/6.5n in the present example.

Example 2

A sample of the optical recording medium according to Example 2 was manufactured by the similar way to the sample of the optical recording medium according to Example 1, except that the substrate on which the width Gw of the groove 11a is set to about 181 nm was used as the supporting substrate 11.

Example 3

A sample of the optical recording medium according to Example 3 was manufactured by the similar way to the sample of the optical recording medium according to Example 1, except that the substrate on which the width Gw of the groove 11 a is set to about 197 nm was used as the supporting substrate 11.

Example 4

A sample of the optical recording medium according to Example 4 was manufactured by the similar way to the sample of the optical recording medium according to Example 1, except that the substrate on which the width Gw of the groove 11a is set to about 208 nm was used as the supporting substrate 11.

Example 5

A sample of the optical recording medium according to Example 5 was manufactured by the similar way to the sample of the optical recording medium according to Example 1, except that the substrate on which the width Gw of the groove 11a is set to about 214 nm was used as the supporting substrate 11.

Example 6

A sample of the optical recording medium according to Example 6 was manufactured by the similar way to the sample of the optical recording medium according to Example 1, except that the substrate on which the depth Gd of the groove 11a is set to about 37 nm and the width Gw of the groove 11a is set to about 161 nm was used as the supporting substrate 11. Therefore, when the laser beam having $\lambda$=405 nm was employed, the depth Gd of the groove 11 a was expressed substantially by Gd=$\lambda$/7n in the present example.

Example 7

A sample of the optical recording medium according to Example 7 was manufactured by the similar way to the sample of the optical recording medium according to Example 6, except that the substrate on which the width Gw of the groove 11a is set to about 181 nm was used as the supporting substrate 11.

Example 8

A sample of the optical recording medium according to Example 8 was manufactured by the similar way to the sample of the optical recording medium according to Example 6, except that the substrate on which the width Gw of the groove 11a is set to about 191 nm was used as the supporting substrate 11.

Example 9

A sample of the optical recording medium according to Example 9 was manufactured by the similar way to the sample of the optical recording medium according to Example 6, except that the substrate on which the width Gw of the groove 11a is set to about 201 nm was used as the supporting substrate 11.

Example 10

A sample of the optical recording medium according to Example 10 was manufactured by the similar way to the sample of the optical recording medium according to Example 6, except that the substrate on which the width Gw of the groove 11a is set to about 212 nm was used as the supporting substrate 11.

Comparative Example 1

A sample of the optical recording medium according to Comparative Example 1 was manufactured by the similar way as the sample of the optical recording medium according to Example 1, except that the substrate on which the depth Gd of the groove 11 a is set to about 33 nm and the width Gw of the groove 11a is set to about 172 nm was used as the supporting substrate 11. Therefore, when the laser beam having $\lambda$=405 nm was employed, the depth Gd of the groove 11 a was expressed substantially by Gd=$\lambda$/8n in the present comparative example.

Comparative Example 2

A sample of the optical recording medium according to Comparative Example 2 was manufactured by the similar way to the sample of the optical recording medium according to Comparative Example 1, except that the substrate on which the width Gw of the groove 11a is set to about 193 nm was used as the supporting substrate 11.

Comparative Example 3

A sample of the optical recording medium according to Comparative Example 3 was manufactured by the similar way to the sample of the optical recording medium according to Comparative Example 1, except that the substrate on which the width Gw of the groove 11 a is set to about 200 nm was used as the supporting substrate 11.

Comparative Example 4

A sample of the optical recording medium according to Comparative Example 4 was manufactured by the similar way to the sample of the optical recording medium according to Comparative Example 1, except that the substrate on which the width Gw of the groove 11a is set to about 208 nm was used as the supporting substrate 11.

Comparative Example 5

A sample of the optical recording medium according to Comparative Example 5 was manufactured by the similar way to the sample of the optical recording medium according to Comparative Example 1, except that the substrate on which the width Gw of the groove 11a is set to about 209 nm was used as the supporting substrate 11.

The depth Gd of the groove 11 a and the width Gw of the groove 11a in Examples 1 to 10 and Comparative Examples 1 to 5 are listed in a following table.

[Table 1]

|  | Gd | Gw |
|---|---|---|
| Example 1 | 41 nm | 169 nm |
| Example 2 | 41 nm | 181 nm |
| Example 3 | 41 nm | 197 nm |
| Example 4 | 41 nm | 208 nm |
| Example 5 | 41 nm | 214 nm |
| Example 6 | 37 nm | 161 nm |
| Example 7 | 37 nm | 181 nm |
| Example 8 | 37 nm | 191 nm |
| Example 9 | 37 nm | 201 nm |
| Example 10 | 37 nm | 212 nm |
| Comparative Example 1 | 33 nm | 172 nm |
| Comparative Example 2 | 33 nm | 193 nm |
| Comparative Example 3 | 33 nm | 200 nm |
| Comparative Example 4 | 33 nm | 208 nm |
| Comparative Example 5 | 33 nm | 209 nm |

[Characteristic Evaluation 1]

First, the samples of the optical recording mediums in Example 1, Example 3, and Example 5 were set on the optical disk evaluation system (DDU1000 manufactured by Pulse Tech Co., Ltd.). Then, while turning the sample at a linear velocity of about 4.9 m/s, a single frequency signal the recording mark length and the blank length of which are 75 nm was recorded by irradiating the laser beam whose wavelength is about 405 nm onto the noble metal oxide layer 23 from the light incident plane 12a via the objective lens having the numerical aperture of about 0.85. When the above optical system was employed, the reading limit given by $d_2=\lambda/4NA$ was about 120 nm. Also, in all the samples of the optical recording mediums in Example 1, Example 3, and Example 5, the depth Gd of the groove 11a was about 41 nm and can be expressed substantially by Gd=$\lambda$/6.5n.

As to the power of the laser beam 40 at a time of recording, the recording power (Pw) was set variously and the ground power (Pb) was set to almost 0 mW. Also, the pattern shown in Fig. 6 was used as a pulse pattern of the laser beam 40.

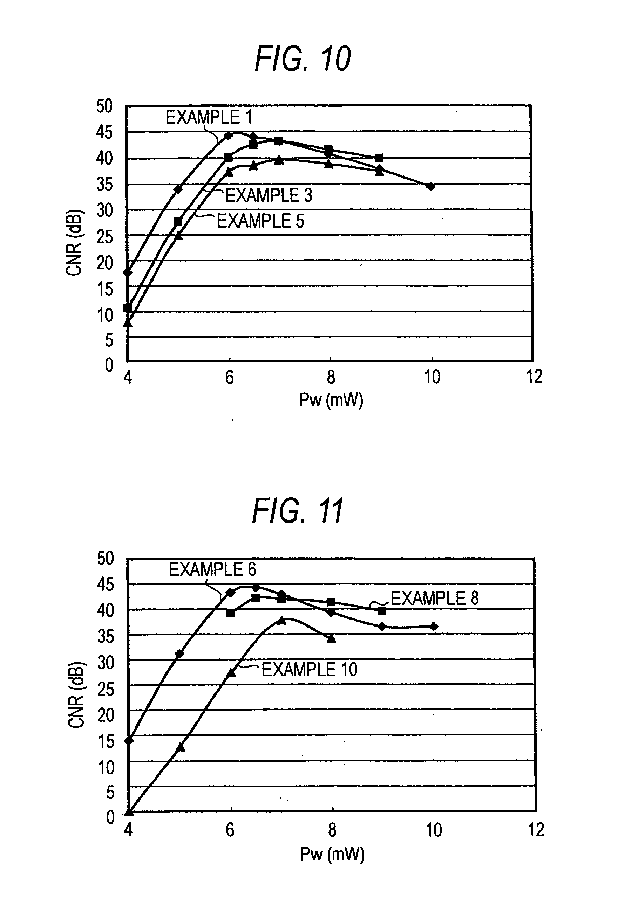

Then, the recorded single frequency signal was read and then its CNR was measured. The reading power (Pr) of the laser beam 40 was set to 2.6 mW, 2.8 mW, and 2.8 mW in the samples of the optical recording mediums in Example 1, Example 3, and Example 5 respectively. Measurement results of the CNR are shown in Fig. 10.

As shown in Fig.10, in all the samples of the optical recording mediums, a tolerance of the recording power (Pw)(recording power margin) was sufficiently wide and the CNR in excess of 39 dB could be obtained at its maximum. The maximum value of the CNR was better in the sample in which the width Gw of the groove 11a was set narrower. Also, the recording power margin was widest in the sample of the optical recording medium in Example 1, in which the width Gw of the groove 11a was set narrowest.

[Characteristic Evaluation 2]

Next, the samples of the optical recording mediums in Example 6, Example 8, and Example 10 were set on the above optical disk evaluation system. Then, the single frequency signal the recording mark length and the blank length of which are 75 nm was recorded under the same conditions as in "the characteristic evaluation 1". In all the samples of the optical recording mediums in Example 6, Example 8, and Example 10, the depth Gd of the groove 11a was about 37 nm and can be expressed substantially by Gd=λ/7n.

As to the power of the laser beam 40 at a time of recording, the recording power (Pw) was set variously and the ground power (Pb) was set to almost 0 mW. Also, the pattern shown in Fig.6 was used as the pulse pattern of the laser beam 40.

Then, the recorded single frequency signal was read and then its CNR was measured. The reading power (Pr) of the laser beam 40 was set to 2.6 mW, 2.8 mW, and 3.0 mW in the samples of the optical recording mediums in Example 6, Example 8, and Example 10 respectively. Measurement results of the CNR are shown in Fig. 11.

As shown in Fig.11, in all the samples of the optical recording mediums, the recording power margin was relatively wide and the CNR in excess of 37 dB could be obtained at its maximum. The maximum value of the CNR was better in the sample in which the width Gw of the groove 11a was set narrower. Also, the recording power margin was wider in the sample in which the width Gw of the groove 11a was set narrower.

[Characteristic Evaluation 3]

Next, the samples of the optical recording mediums in Comparative Example 1, Comparative Example 2, and Comparative Example 4 were set on the above optical disk evaluation system. Then, the single frequency signal the recording mark length and the blank length of which are 75 nm was recorded under the same conditions as in "the characteristic evaluation 1". In all the samples of the optical recording mediums in Comparative Example 1, Comparative Example 2, and Comparative Example 4, the depth Gd of the groove 11a was about 33 nm and can be substantially expressed by Gd=λ/8n.

As to the power of the laser beam 40 at a time of recording, the recording power (Pw) was set variously and the ground power (Pb) was set to almost 0 mW. Also, the pattern shown in Fig.6 was used as the pulse pattern of the laser beam 40.

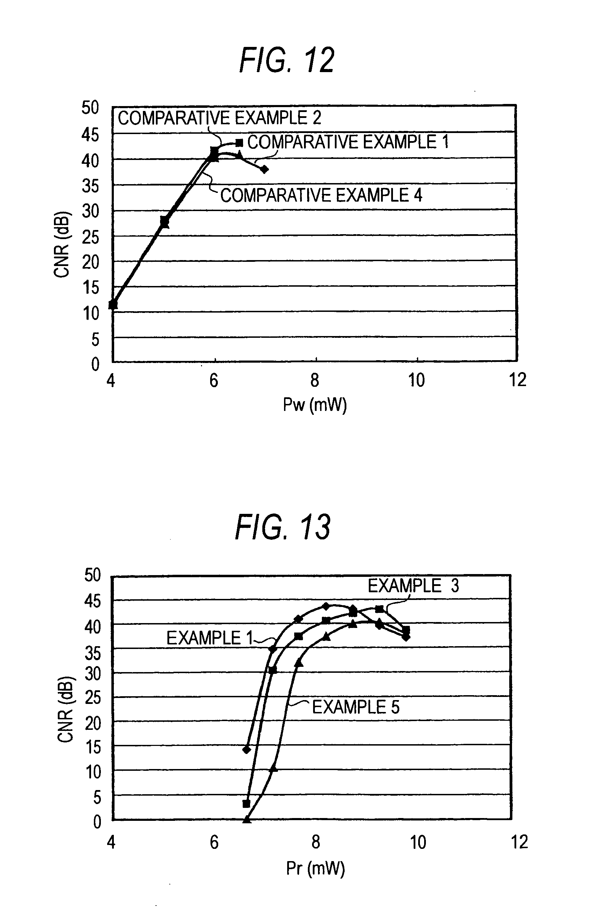

Then, the recorded single frequency signal was read and then its CNR was measured. The reading power (Pr) of the laser beam 40 was set to 2.6 mW, 2.8 mW, and 2.6 mW in the samples of the optical recording mediums in Comparative Example 1, Comparative Example 2, and Comparative Example 4 respectively. Measurement results of the CNR are shown in Fig.12.

As shown in Fig.12, in all the samples of the optical recording mediums, the high CNR could be obtained as the maximum value. However, when the recording power (Pw) is increased, the optical recording medium is easily out of tracking and the recording could not be executed. For this reason, the recording power margin was extremely narrow, and it was difficult to put these samples into practical use.

[Characteristic Evaluation 4]

Next, out of the single frequency signals recorded in "the characteristic evaluation 1", the single frequency signals recorded by setting the recording power (Pw) to 6.0 mW, 6.5 mW, and 6.5 mW in the samples of the optical recording mediums in Example 1, Example 3, and Example 5 respectively were read by using various reading powers, and their CNR was measured. Measurement results of the CNR are shown in Fig.13.

As shown in Fig.13, in all the samples of the optical recording mediums, a tolerance of the reading power (Pr) (reading power margin) was sufficiently wide and the CNR in excess of 40 dB could be obtained at its maximum. Also, the maximum value of the CNR was better in the sample in which the width Gw of the groove 11a was set narrower.

[Characteristic Evaluation 5]

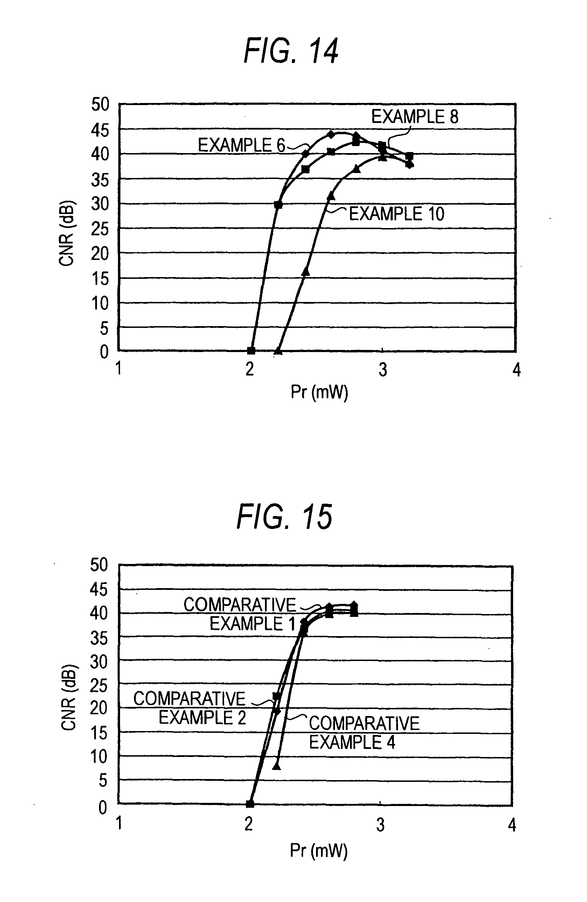

Next, out of the single frequency signals recorded in "the characteristic evaluation 2", the single frequency signals recorded by setting the recording power (Pw) to 6.0 mW, 6.5 mW, and 7.0 mW in the samples of the optical recording mediums in Example 6, Example 8, and Example 10 respectively were read by using various reading powers, and their CNR was measured. Measurement results of the CNR are shown in Fig.14.

As shown in Fig.14, in all the samples of the optical recording mediums, the reading power margin was sufficiently wide and the CNR in excess of 39 dB could be obtained at its maximum. Also, the maximum value of the CNR was better in the sample in which the width Gw of the groove 11a was set narrower.

[Characteristic Evaluation 6]

Next, out of the single frequency signals recorded in "the characteristic evaluation 3", the single frequency signals recorded by setting the recording power (Pw) to 6.0 mW in all the samples of the optical recording mediums in Comparative Example 1, Comparative Example 2, and Comparative Example 4 were read by using various reading powers, and their CNR was measured. Measurement results of the CNR are shown in Fig.15.

As shown in Fig.15, in all the samples of the optical recording mediums, the high CNR could be obtained as the maximum value. However, when the reading power (Pr) is increased, the optical recording medium is easily out of tracking and the reading could not be executed. For this reason, the reading power margin was extremely narrow, and it was difficult to put these samples into practical use.

[Characteristic Evaluation 7]

Next, the samples of the optical recording mediums in Examples 1 to 10 and Comparative Examples 1 to 5 were set on the optical disk evaluation system. Then, the laser beam whose wavelength is about 405 nm was irradiated onto the unrecorded track from the light incident plane 12a via the objective lens having the numerical aperture of about 0.85 while turning the sample at the linear velocity of about 4.9 m/s, and then a resultant push-pull signal was measured and also a normalized value (NPP) of this signal was calculated. The power of the laser beam was set to 0.4 mW in all the samples of the optical recording mediums.

When one output of the photo detectors divided in the track direction is $I_1$ and the other output is $I_2$, the normalized value (NPP) of the push-pull signal is defined by a difference between the maximum value and the minimum value of a value given by $(I_1-I_2)/(I_1+I_2)$.

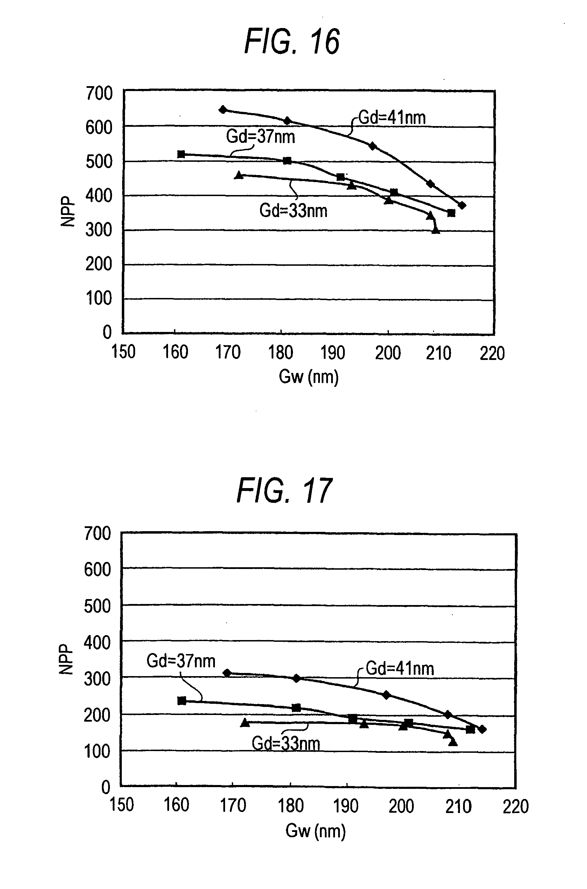

Measurement results are shown in Fig.16.

As shown in Fig.16, such a tendency appeared clearly that the normalized value (NPP) of the push-pull signal is increased as the depth Gd of the groove 11a becomes deeper and further the width Gw of the groove 11a becomes narrower.

[Characteristic Evaluation 8]

Next, the samples of the optical recording mediums in Examples 1 to 10 and Comparative Examples 1 to 5 were set on the optical disk evaluation system. Then, the single frequency signal the recording mark length and the blank length of which are 75 nm was recorded under the same conditions as in "the characteristic evaluation 1". The recording power (Pw) and the ground power (Pb) of the laser beam 40 at a time of recording were set to 8.0 mW and almost 0 mW respectively in all the samples of the optical recording mediums. Also, the pattern shown in Fig.6 was used as the pulse pattern of the laser beam 40.

Then, the laser beam is irradiated onto the track on which the single frequency signal was recorded, and then the resultant push-pull signal was measured and also the normalized value (NPP) of this signal was calculated. The power of the laser beam was set to 0.4 mW in all the samples of the optical recording mediums, as in "the characteristic evaluation 7".

Measurement results are shown in Fig.17.

As shown in Fig.17, such a tendency was exhibited after the recording that the normalized value (NPP) of the push-pull signal is increased as the depth Gd of the groove 11a becomes deeper and further the width Gw of the groove 11a becomes narrower. In the samples of the optical recording mediums in Comparative Example 1 to Comparative Example 5, the tracking could not be applied.

<Industrial Applicability>

According to the present invention, an optical recording medium whose signal characteristics at a time of super- resolution recording and super-resolution reading are improved, and a method of manufacturing the same are provided. Also, a method of recording data on an optical recording medium whose signal characteristics at a time of super-resolution recording and super-resolution reading are improved, and a method of reading the data from such optical recording medium, by using a laser beam having a shorter wavelength and an objective lens having a larger numerical aperture are provided.

**Claims**

1. An optical recording medium comprising:

    a substrate on which a groove is formed;
    a noble metal oxide layer provided on the substrate;
    a first dielectric layer provided on a light incident plane side when viewed from the noble metal oxide layer; and
    a second dielectric layer provided on a side opposite to the light incident plane when viewed from the noble metal oxide layer;
    wherein the optical recording medium is able to record data by irradiating a laser beam whose wavelength is λ onto the noble metal oxide layer along the groove, and
    a depth of the groove is set in excess of λ/8n but 60 nm or less, where n is a refractive index of an optical path of the laser beam of a light whose wavelength is λ.

2. An optical recording medium according to claim 1, wherein the depth of the groove is set to λ/7n or more but 50 nm or less.

3. An optical recording medium according to claim 1, further comprising:

    a light absorbing layer and a third dielectric layer arranged in order on an opposite side to the light incident plane when viewed from the second dielectric layer.

**4.** An optical recording medium according to claim 3, further comprising:

a reflecting layer provided between the substrate and the third dielectric layer.

**5.** An optical recording medium according to claim 1, wherein platinum oxide (PtOx) is contained in the noble metal oxide layer.

**6.** An optical recording medium according to any one of claims 1 to 5, further comprising:

a light transmitting layer provided to an opposite side to the substrate when viewed from the first dielectric layer, to act as the optical path of the laser beam; and
wherein a thickness of the substrate is set to 0.6 mm or more but 2.0 mm or less, and a thickness of the light transmitting layer is set to 10 $\mu$m or more but 200 $\mu$m or less.

**7.** A method of manufacturing an optical recording medium, comprising:

a first step of forming a reflecting layer, a third dielectric layer, a light absorbing layer, a second dielectric layer, a noble metal oxide layer, and a first dielectric layer in order on a substrate on which a groove is formed; and
a second step of forming a light transmitting layer on the first dielectric layer;
wherein a depth of the groove is set in excess of $\lambda/8n$ but 60 nm or less, where $\lambda$ is a wavelength of a laser beam used to record or read data, and n is a refractive index of the light transmitting layer to a light whose wavelength is $\lambda$.

**8.** A method of manufacturing an optical recording medium, according to claim 1, wherein the first step is executed by a chemical vapor deposition, and the second step is executed by a spin coating method.

**9.** A data recording method of recording data by irradiating a laser beam onto the optical recording medium set forth in any one of claims 1 to 5 from the light incident plane side,
$\lambda/NA$ is set to 640 nm or less and a recording mark train containing a recording mark whose length is $\lambda/4NA$ or less is recorded, where $\lambda$ is a wavelength of the laser beam and NA is a numerical aperture of an objective lens used to converge the laser beam.

**10.** A data reading method of reading data by irradiating a laser beam onto the optical recording medium set forth in any one of claims 1 to 5 from the light incident plane side,
$\lambda/NA$ is set to 640 nm or less and data are read from a recording mark train containing a recording mark whose length is $\lambda/4NA$ or less, where $\lambda$ is a wavelength of the laser beam and NA is a numerical aperture of an objective lens used to converge the laser beam.

## FIG. 1 (a)

## FIG. 1 (b)

## FIG. 2

## FIG. 3

## FIG. 4 (a)

W1

W2

42

41

## FIG. 4 (b)

A

INTENSITY

1/e²

## FIG. 5

W1

W2

23b

40

40

31

23

32

23a

## FIG. 6

RECORDING
MARK M1

RECORDING
MARK M2

RECORDING
MARK M3

Pw

Pb

40a

## FIG. 7

RECORDING
MARK M1

RECORDING
MARK M2

RECORDING
MARK M3

Pw

Pb

40a

## FIG. 8

CNR

Pw1          Pw2

RECORDING POWER

## FIG. 9

CNR

Pr1  Pr2

READING POWER

## FIG. 10

## FIG. 11

## FIG. 12

## FIG. 13

## FIG. 14

## FIG. 15

## FIG. 16

## FIG. 17

| **INTERNATIONAL SEARCH REPORT** | International application No. |
| --- | --- |
| | PCT/JP2004/013004 |

| A. CLASSIFICATION OF SUBJECT MATTER |
| --- |
| Int.Cl$^7$ G11B7/004, 7/24, 7/26 |
| |
| According to International Patent Classification (IPC) or to both national classification and IPC |

| B. FIELDS SEARCHED |
| --- |
| Minimum documentation searched (classification system followed by classification symbols) |
| Int.Cl$^7$ G11B7/00-7/013, 7/24, 7/26 |

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | JP 6-262854 A (Konica Corp.),<br>20 September, 1994 (20.09.94),<br>Par. Nos. [0024], [0043] to [0046]<br>(Family: none) | 1,2,5<br>3,4,6-10 |
| Y | JP 2002-052057 A (National Institute of<br>Advanced Industrial Science and Technology),<br>25 January, 2002 (25.01.02),<br>Par. No. [0004]; Fig. 5<br>(Family: none) | 3,4,7,8 |
| Y | JP 2002-008269 A (Sony Corp.),<br>11 January, 2002 (11.01.02),<br>Par. Nos. [0028], [0034], [0046]<br>(Family: none) | 6-10 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 17 December, 2004 (17.12.04) | 11 January, 2005 (11.01.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

## INTERNATIONAL SEARCH REPORT

| International application No. |
|---|
| PCT/JP2004/013004 |

---

**Box No. II          Observations where certain claims were found unsearchable (Continuation of item 2 of first sheet)**

This international search report has not been established in respect of certain claims under Article 17(2)(a) for the following reasons:

1. ☐  Claims Nos.:
   because they relate to subject matter not required to be searched by this Authority, namely:

2. ☐  Claims Nos.:
   because they relate to parts of the international application that do not comply with the prescribed requirements to such an extent that no meaningful international search can be carried out, specifically:

3. ☐  Claims Nos.:
   because they are dependent claims and are not drafted in accordance with the second and third sentences of Rule 6.4(a).

---

**Box No. III          Observations where unity of invention is lacking (Continuation of item 3 of first sheet)**

This International Searching Authority found multiple inventions in this international application, as follows:

   (See extra sheet)

1. ☐  As all required additional search fees were timely paid by the applicant, this international search report covers all searchable claims.

2. ☒  As all searchable claims could be searched without effort justifying an additional fee, this Authority did not invite payment of any additional fee.

3. ☐  As only some of the required additional search fees were timely paid by the applicant, this international search report covers only those claims for which fees were paid, specifically claims Nos.:

4. ☐  No required additional search fees were timely paid by the applicant.   Consequently, this international search report is restricted to the invention first mentioned in the claims; it is covered by claims Nos.:

**Remark on Protest**          ☐   The additional search fees were accompanied by the applicant's protest.

                              ☐   No protest accompanied the payment of additional search fees.

---

Form PCT/ISA/210 (continuation of first sheet (2)) (January 2004)

**INTERNATIONAL SEARCH REPORT**

International application No.

PCT/JP2004/013004

Continuation of Box No.III of continuation of first sheet(2)

The inventions of claims 1, 2, 5 do not have a special technical feature since the inventions are known from JP 6-262854 A. The inventions of claims 3, 4, 6, 9, 10 try to solve other objects by adding further limitations. Accordingly, the inventions of claims 1, 2, 5 and the inventions of claims 3, 4, 6, 9, 10 do not satisfy the requirement of unity of invention.

The inventions of claims 7, 8 relate to a method for manufacturing an optical recording medium disclosed in claim 6 referring to claim 4. Accordingly, the inventions of claims 1, 2, 5 and the inventions of claims 7, 8 do not satisfy the requirement of unity of invention.

Consequently, the present application includes the following two groups of inventions:
claims 1, 2, 5, and
claims 3, 4, 6-10
which do not satisfy the requirement of unity of invention.

Form PCT/ISA/210 (extra sheet) (January 2004)